# EUROPEAN PATENT APPLICATION

(11) **EP 0 905 871 A2**
(43) Date of publication of application: **31.03.1999**
(21) Application number: 98202897.9
(22) Date of filing: 31.08.1998
(51) Int. Cl.: H02M 5/293

(54) **A.C. to A.C. line frequency power converter**

(30) Priority: 25.09.1997 FI 973782
(71) Applicant: Oy Helvar, 00380 Helsinki (FI)
(72) Inventor: Wade, Scott, Sevenoaks, Kent, TN15 6EJ (GB)
(74) Representative: LEITZINGER OY

(57) **Abstract**

The invention relates to an AC to AC line frequency power converter having terminals for input and output and two circuit branches connected to the output terminal either directly or through an output inductor (Lₒᵤₜ) and/or an output filter. The first branch includes a series connection of two semiconductor switches (M1, M2) and two diodes for allowing current flow through the output in the first direction and the second branch includes a series connection of two semiconductor switches (M3, M4) and two diodes for allowing current flow through the output in the second direction. The diodes in each branch have mutually opposite forward directions and the semiconductor switches in each branch also have mutually opposite forward directions. One end of the output inductor (Lₒᵤₜ), output filter, or the output terminal has at least indirect connection to the points between the two diodes in each branch. An impedance (Z1) joins the two branches such that each terminal of the impedance (Z1) is connected at the joining point of the two diodes of only one branch.

## Description

The invention relates to A.C. to A.C. line frequency power converter according to preamble of claim 1.

The objective of the line frequency power converter is to efficiently convert one input r.m.s. voltage to a different voltage but the same frequency. The input is usually an a.c. waveform, though could be d.c. if desired. The converter is bi-directional, allowing power flow in either direction. The voltage at the first set of terminals is scaled down by a controllable factor and applied to the other set of terminals. Alternatively, the voltage at the second set of terminals can be scaled up by a controllable factor and output on the first set of terminals. It is not necessary to have two pairs of terminals. 3 terminals is sufficient - one input, one output, and one common to both.

There are many applications, for example a harmonic free light dimmer where the sinusoidal mains supply at the input is scaled from 0 to 100% and output with very little harmonic content. Another application could be to step up from 110V mains to provide a 230V mains supply at the same frequency, or to convert from 230V to 110V. The load type is not restricted to purely resistive loads, but may be partly or purely reactive.

The general practice in converting from one a.c. voltage to another depends on the application requirements. Using a variac is a reliable method of converting from one ac voltage to another, with little distortion of the waveform. Phase-cutting of the input waveform is a low cost and efficient method of varying the r.m.s. voltage delivered to the load. The method using a full bridge switching converter arrangement, with a d.c. link, provides a variable frequency and voltage. The a.c. chopper method varies the r.m.s. voltage while maintaining the input waveform frequency and shape.

The variac method is expensive and large in size, giving slow control of the output. The phase-cutting method generates large harmonics of the line frequency in the mains supply and load, with the additional problem of fast voltage and current rise/fall times. The full bridge converter arrangement is expensive, has high switching losses, and does not allow neutral connected loads. An additional input bridge is required for bi-directional power flow, increasing losses further. The a.c. chopper solves the problem of line frequency harmonics and rise times, at the expense of higher cost and reduced efficiency. The improvements according to the present invention help reduce the cost and increase efficiency of the a.c. chopper.

The a.c. chopper consists of a series current interrupting path and a shunt free-wheel path. A novel configuration of this is presented here, which allows the two branches of the circuit, required for a.c. use, to be connected without resulting in large losses and device stresses. The novel controlled diode recovery circuit further reduces switching losses and device stresses, making the overall power conversion more efficient and reliable. This allows higher switching frequencies, smaller and lower rated components to be used, and higher efficiency, with significant cost savings.

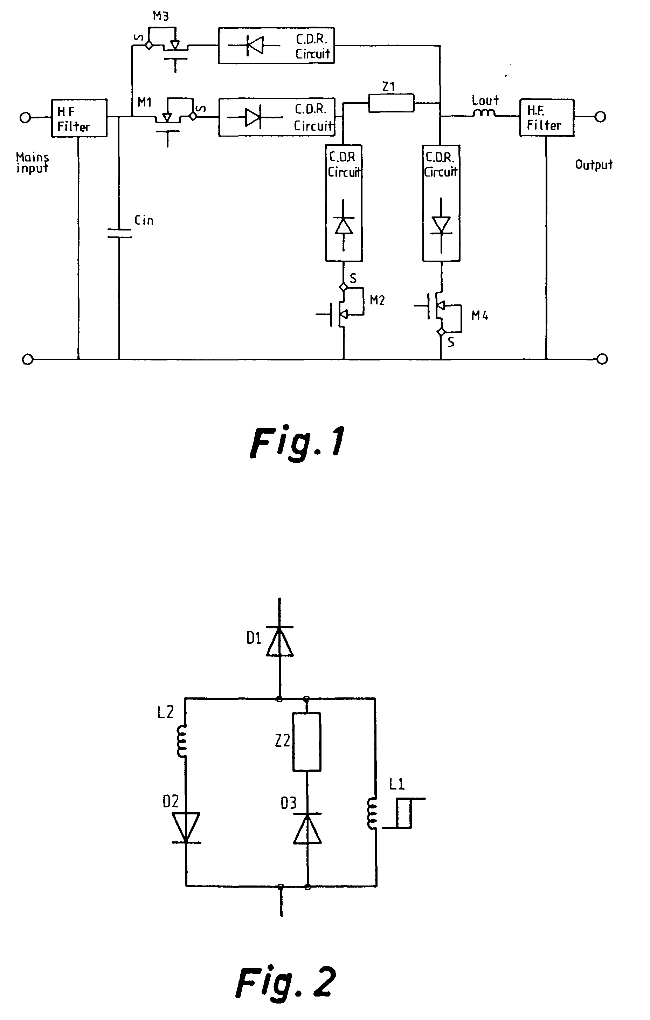

The configuration of the a.c. chopper circuit presented here is prior-art, with the exception of the novel method of connecting the two branches using an impedance (Z1 in figure 1), and the controlled diode recovery (C.D.R.) circuits.

Usually, the two branches of an a.c. chopper circuit (one for each polarity of output current flow) are connected together at their centre points, which are in turn connected to the output filter (if used) or output terminal. This has the problem of causing large current flow during overlap (for whatever reason) of the switch on-times. A branch joining impedance (Z1) according to claim 1 is used here to limit the current flowing during overlap.

Using an impedance (normally an inductor and resistor in parallel) to join the two branches of an AC chopper (see figure 1) has two benefits.

The first is to allow periods of overlap between the switching devices, which would cause a short-circuit of the input supply rail in the conventional circuit. The impedance is chosen to allow only a small rate of increase in current during this overlap time.

The second benefit is to prevent large losses and stresses generated when one switch turns on, and another, which is off, is turned on by the dv/dt generated across its terminals. This would normally cause a temporary short across the input supply rail, but the impedance has the same affect as in the first benefit, allowing only a small increase in current to flow.

The impedance also forms part of the output filter for one branch of the circuit.

In the following the invention will be explained in more detail by reference to enclosed drawings wherein
- Figure 1: shows an overall power converter according to the present invention, and
- Figure 2: shows a circuit diagram of the controlled diode recovery circuit shown as blocks (C.D.R. Circuit) in figure 1.
- Figure 3: shows an alternative to figure 1, where the branch joining impedance, Z1, has been replaced by two impedances, Z1' and Z1'', with the connection to Lₒᵤₜ being taken from the joining point of these impedances.

The overall power converter is shown in figure 1. The power flow does not have to be from the mains input to the output, but the rms voltage on the terminals shown as output will always be less than or equal to the voltage at the terminals shown as mains input. The circuit behaves in a similar way to a forward converter when transferring energy from the mains input to the output, but behaves in a similar way to a flyback converter when transferring energy from the output to the input. The novel configuration contains an impedance (Z1) to join the two branches. The connection to output impedance Lₒᵤₜ may be taken from either side of Z1. Novel circuits to control diode reverse recovery are shown as blocks (C.D.R. Circuit) in figure 1, but are expanded in figure 2.

The switching devices shown (M1-M4) are MOSFETs, but other semiconductor switching devices may be used instead. The circuits to generate the gate drives for M1-M4 are not shown. Cᵢₙ forms the last stage of the input filter, and Lₒᵤₜ forms the first stage of the output filter.

The top switching devices (M1 & M3) are turned on to connect the output inductor (Lₒᵤₜ) to the input capacitor (Cᵢₙ), or alternatively the bottom switches (M2 & M4) are turned on to connect Lₒᵤₜ to ground (neutral), providing a freewheel path. This switching between top switches and bottom switches is carried out at a high frequency and a variable duty ratio. The duty ratio of top:top+bottom switch on-times scales the average voltage seen by Lₒᵤₜ at its left terminal. If the duty ratio is left constant, the output waveform will be a scaled version of the input waveform. High frequency filters may be used to prevent the switching frequency and its harmonic components from reaching the supply or load. If filtering is not required, the H.F. filters may be replaced with a short circuit from input to output, Lₒᵤₜ may be replaced by a short circuit, and Cᵢₙ may be replaced by an open circuit.

There are two branches for current flow in the circuit of figure 1. The M1-M2 branch carries current only when the current through Lₒᵤₜ flows from left to right. The M3-M4 branch carries current only when the current through Lₒᵤₜ flows from right to left. Only one switch is required to control current flow for a specific combination of input voltage polarity and output current direction, other switches being left on or off as appropriate.

The novel a.c. chopper circuit configuration of two branches (M1-M2 and M3-M4 with their associated diode circuits) joined by Z1 allows an overlap of the on-time between the top (M1 & M3) and bottom (M2 & M4) switches. An inductive component of Z1 prevents the large currents which would otherwise flow (if Z1 was a short-circuit) through the effective short-circuit of Cᵢₙ by M1-M4 or M2-M3 during the overlap time. Overlap of the on-times may be caused by timing errors of gate drive signals, rise/fall times of switch currents, or undesirable dv/dt turn-on of switches. One possible configuration for Z1 is an inductor and resistor in parallel, the inductor preventing large currents during overlap, and the resistor dissipating the energy stored in the inductor due to overlap of switch on-times.

The controlled diode recovery (C.D.R.) circuit is shown in figure 2. This circuit allows the corresponding power switch to be turned on rapidly, without regard for the main diode (D1) recovery current slope or magnitude. The circuit below D1 has the function of controlling the reverse recovery current of D1, while giving low power loss, and unhindered forward conduction of D1. L1 is a saturable inductor.

During forward conduction of D1, all the current flows through L1. L1 is saturated, and no current flows through the D2 or D3 branches. Losses are mainly due to the forward conduction losses of D1.

When the cathode of D1 is pulled high relative to the bottom rail of the circuit, D1 will not block reverse current flow until it recovers. No current will flow through the D3 branch, as it recovers almost immediately, due to no forward current previously flowing through D3. L1, which was previously carrying current from bottom to top, will block the voltage now across it until its volt-second rating is exceeded. Therefore, the only branch which will support reverse recovery current of D1 is presently the L2/D2 branch. The current flow starts at zero and increases approximately linearly due to the voltage across L2.

Eventually D1 recovers, with the peak recovery current flowing through L2/D2, and the volt-second rating of L1 not quite reached. The peak recovery current will now freewheel through the L2/D2, D3/Z2 loop, decaying as the energy is dissipated in resistance of Z2. A voltage appears across Z2 due to this current, causing L1's bottom terminal to be positive with respect to its top. This moves the state of L1 towards saturation for current flow from bottom to top. The volt-second (v.t) product required to reduce the L2 current to zero is the same as that required to saturate L1 for current flow in the main diode forward direction. Possibilities for Z2 are a single resistor, or a resistor in series with a parallel R-C. This second possibility allows fast reduction of the L2 current (and saturating of L1) while giving a smaller peak voltage drop in comparison to a single resistor.

When D1 is next required to conduct, L1 will rapidly saturate (if not already saturated) during the fall time of the top rail voltage. Some current flows through D3/Z2, before L1 fully saturates, during the rise time of the forward current through D1. When L1 saturates, it will carry all the forward conduction current, allowing D3 to recover.

It can be seen that the C.D.R. circuit adds no significant conduction losses, and reduces switching losses due to the controlled reverse recovery current of the main diode.

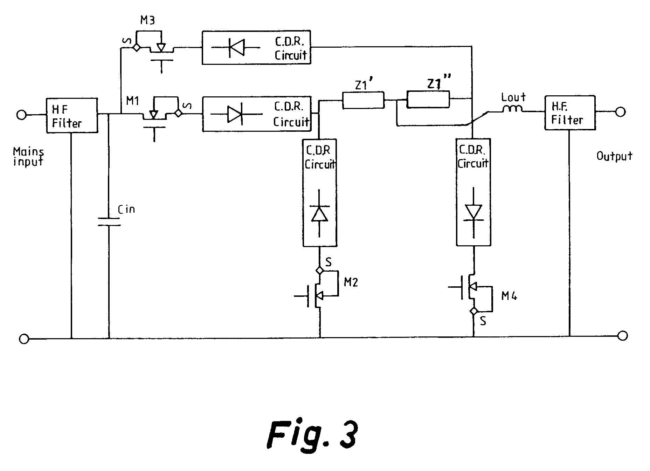

It is possible to modify the a.c. chopper circuit of Fig. 1 in several ways,
(i) The connection to Lₒᵤₜ could be taken from the other side of Z1.
(ii) Z1 can be replaced by two impedances Z1' and Z1'' in series, with Lₒᵤₜ taken from the connection between these impedances as shown in Fig. 3. In this case both halves of the circuit have the same additional output filtering caused by the impedances. These two impedances could consist of separate inductors, or mutually coupled inductors, with or without parallel resistors.
(iii) The impedance could be an inductor and resistor in parallel, but alternatives include an inductor in parallel with series back to back zener diodes etc.

The a.c. chopper may be used in light dimmers, power supplies, motor controllers, heating controllers, voltage regulators/stabilisers or other applications requiring an a.c. input voltage to be converted to a higher or lower output voltage. It may also operate from d.c. supplies.

## Claims

1. AC to AC line frequency power converter having terminals for input and output and two circuit branches connected to the output terminal either directly or through an output inductor (Lₒᵤₜ) and/or an output filter, the first branch including a series connection of two semiconductor switches (M1, M2) and two diodes for allowing current flow through the output in the first direction and the second branch including a series connection of two semiconductor switches (M3, M4) and two diodes for allowing current flow through the output in the second direction, the diodes in each branch having mutually opposite forward directions and the semiconductor switches in each branch also having mutually opposite forward directions, one end of the output inductor (Lₒᵤₜ), output filter, or the output terminal having at least indirect connection to the points between the two diodes in each branch, **characterized** by an impedance (Z1), which joins the two branches such that each terminal of the impedance (Z1) is connected at the joining point of the two diodes of only one branch.

2. Converter according to claim 1, **characterized** in that the output inductor (Lₒᵤₜ), output filter, or the output terminal is connected to one side of the impedance (Z1).

3. Converter according to claim 1, **characterized** in that the impedance includes two impedances (Z1', Z1'') in series, the output inductor (Lₒᵤₜ), output filter or the output terminal being connected at the junction of the two impedances.

4. Converter according to claim 1, **characterized** in that the two impedances (Z1', Z1'') include two inductors, which are mutually coupled.

5. Converter according to claim 1, **characterized** in that the impedance is an inductor and a resistor in parallel.

6. Converter according to claim 1, **characterized** in that the impedance is an inductor in parallel with series back to back zener diodes.

7. Converter according to claim 1, **characterized** in that each of said four diodes, called main diodes (D1) in the following, has been provided with a controlled diode recovery circuit (c.d.r.circuit) including a saturable inductor (L1) in series with the main diode (D1), a second inductor (L2) and a second diode (D2) in series with the second inductor (L2), the series combination of the second inductor (L2) and the second diode (D2) being in parallel with the saturable inductor (L1), the second inductor (L2) being dimensioned for a controlled rate of increase in reverse recovery current of said main diode (D1), the second diode (D2) having its forward direction opposite to the forward direction of the main diode (D1) for allowing the flow of the reverse recovery current of the main diode (D1).

8. Converter according to claim 7, **characterized** in that in parallel with the saturable inductor (L1) and with the series combination of the second inductor (L2) and the second diode (D2) there is a series connection of a third diode (D3) and a second impedance (Z2), the third diode (D3) and the main diode (D1) having the same forward direction.

9. Converter according to claim 8, **characterized** in that the second impedance (Z2) is a resistor or a resistor in series with a parallel connection of a resistor and a capacitor.
